# FASCICULE DE BREVET EUROPEEN

(11) **EP 3 755 627 B1**
(45) Date de publication et mention de la délivrance du brevet: **10.05.2023**
(21) Numéro de dépôt: 19711970.4
(22) Date de dépôt: 19.02.2019
(51) Int. Cl.: B64F 5/50, F01D 25/28, F02K 1/72

(54) **ENSEMBLE DE MOTORISATION POUR AERONEF COMPORTANT DES POINTS DE LEVAGE, ET CHARIOTS POUR SUPPORTER UN TEL ENSEMBLE**
ANTRIEBSEINHEIT FÜR EIN FLUGZEUG MIT HEBESTELLEN UND FAHRGESTELLE ZUR UNTERSTÜTZUNG EINER SOLCHEN EINHEIT
DRIVE UNIT FOR AN AIRCRAFT HAVING LIFTING POINTS, AND CARRIAGES FOR SUPPORTING SUCH A UNIT

(30) Priorité: 20.02.2018 FR 1851445
(43) Date de publication de la demande: 30.12.2020
(73) Titulaire: Safran Nacelles, 76700 Gonfreville-l'Orcher (FR); SAFRAN AIRCRAFT ENGINES, 75015 Paris (FR)
(72) Inventeur: BOILEAU, Patrick, 76700 Gonfreville L'Orcher (FR); BEUTIN, Bruno, 77550 Moissy Cramayel (FR)
(74) Mandataire: Germain Maureau
(86) Numéro de dépôt international: PCT/FR2019/050380
(87) Numéro de publication internationale: WO 2019/162611

(56) Documents cités:
- EP-A1- 2 848 536
- WO-A1-2015/114276
- FR-A1- 2 936 493
- US-A1- 2015 316 197
- US-A1- 2016 160 799

## Description

La présente invention concerne un ensemble de motorisation pour aéronef, comprenant un moteur tel un turboréacteur et une nacelle équipée d'un inverseur de poussée à grilles, ainsi qu'un chariot de manutention pour cet ensemble.

Les turboréacteurs de motorisation des aéronefs disposés dans une nacelle, reçoivent de l'air frais venant du côté avant, et rejettent du côté arrière les gaz chauds issus de la combustion du carburant délivrant une poussée.

Pour les turboréacteurs à double flux, des aubes de soufflante disposées autour du moteur génèrent un flux secondaire important d'air froid le long d'une veine annulaire passant entre ce moteur et la nacelle, qui ajoute une poussée élevée.

Certaines nacelles comportent un système d'inversion de poussée qui ferme au moins en partie la veine annulaire d'air froid, et rejette le flux secondaire radialement vers l'extérieur en le dirigeant vers l'avant afin de générer une poussée inversée de freinage de l'aéronef.

Un type d'inverseur de poussée à grilles connu, présenté notamment par le document US-A1-20160160799, comporte des grilles d'inversion formant une couronne disposée sous des capots avant, entourant la veine annulaire, qui sont reliées à des capots mobiles arrière coulissant vers l'arrière sous l'effet de vérins.

Dans une position fermée de l'inverseur pour un flux direct, les capots mobiles arrière ferment des passages latéraux vers l'extérieur disposés autour de la veine annulaire.

Dans une position ouverte de l'inverseur pour un flux inversé, les capots arrière manoeuvrés par des vérins reculent sur des guidages longitudinaux, en entraînant les grilles qui se positionnent dans les passages d'airs latéraux. Des volets de fermeture ferment au moins partiellement le flux secondaire en arrière de ces passages, en refoulant le flux vers les grilles qui inversent la poussée.

Dans ce cas la surface extérieure de la nacelle est composée en partant de l'avant, d'une section amont comprenant l'entrée d'air, puis une section médiane entourant la soufflante, présentant des capots avant amovibles pour la maintenance, et ensuite une section arrière ou aval recouverte par les capots mobiles de l'inverseur de poussée.

Les capots avant couvrant le tour de la nacelle, peuvent comporter en particulier des capots latéraux, un capot du dessous, et un capot du dessus disposé dans la continuité d'un capotage du pylône de suspension du turboréacteur. Le pylône de suspension permet de suspendre la motorisation à une aile de l'aéronef.

En outre, le moteur comporte des points de suspension généralement disposés à 12 h, qui sont configurés pour recevoir des chapes de suspension permettant de fixer le pylône de suspension au moteur.

Les différents capots avant comportent des systèmes de démontage permettant de les faire pivoter ou de les déposer complètement afin d'accéder aux éléments dans la nacelle, en particulier à la motorisation, pour des opérations de maintenance. Par ailleurs la motorisation comporte des points de levage disposés sur son pourtour, formant des points résistants d'accrochage recevant des chapes de manutention permettant de soulever et de transporter la motorisation complète avec sa nacelle.

Un type de chariot de transport connu, présenté notamment par le document US-A1-20150316197, comporte de chaque côté un bras de fixation monté sur un pivot disposé suivant la direction longitudinale de la motorisation. Les deux bras s'écartent vers l'extérieur du chariot pour laisser entre eux la place afin de descendre la nacelle comprenant la motorisation, sur laquelle on a retiré des capots avant afin de dégager les points de levage latéraux du turboréacteur. Puis on referme ces deux bras sur la nacelle, en engageant un arbre fixé à l'extrémité de chaque bras sur un de ces points de levage qui est disposé à trois heures ou à neuf heures.

On obtient après un verrouillage des bras, une suspension du turboréacteur avec sa nacelle en deux points latéraux diamétralement opposés, disposés suivant une direction horizontale, qui maintiennent un équilibre de la motorisation.

Un inconvénient de ces motorisations est qu'elles nécessitent un temps important pour démonter des capots avant permettant de dégager des zones suffisamment larges devant les points de levage.

De plus les structures de levage et de transport, comme le chariot de transport présenté ci-dessus, occupent un espace latéral qui déborde de la largeur de la nacelle, afin de disposer les bras venant sur les côtés de cette nacelle pour prendre les points de levage latéraux. Cette largeur occupée pose des problèmes de manutention et de transport d'autant plus importants que les motorisations modernes tendent à augmenter le taux de dilution par la soufflante, ce qui entraîne un diamètre plus important de cette soufflante, et des bras plus écartés. Le document WO 2015/114276 A1 divulgue un chariot de manutention portant un ensemble de motorisation dont le capotage cylindrique externe de nacelle a été retiré.

La présente invention a notamment pour but d'éviter ces inconvénients de la technique antérieure.

Elle propose à cet effet un ensemble de motorisation selon la revendication 1.

Un avantage de cet ensemble de motorisation est qu'après avoir dégagé les points de levage disposés derrière les capots avant, en ouvrant les trappes formées dans ces capots, grâce à la disposition de ces points de levage au-dessus du diamètre horizontal on peut installer sur chaque point une chape de manutention recevant un bras de reprise qui vient du haut ou de l'arrière, mais sans dépasser latéralement du diamètre extérieur horizontal de la nacelle. On obtient un encombrement total en largeur de la structure de levage ou de manutention qui ne dépasse pas de la largeur de la nacelle, ce qui facilite les transports de cet ensemble.

L'ensemble de motorisation selon l'invention peut comporter une ou plusieurs des caractéristiques suivantes, qui peuvent être combinées entre elles.

L'ensemble de motorisation comporte des points de suspension à un pylône.

Selon la revendication 1, chaque capot avant latéral comporte une trappe amovible et mobile entre une position fermée dans laquelle la trappe affleure ledit capot et une position ouverte dans laquelle la trappe ouvre l'accès à un point de levage supérieur, disposée radialement à l'extérieur du point de levage supérieur de son côté. Chaque trappe amovible est configurée pour être ouverte pour donner accès aux points de levage supérieurs pour la manutention de l'ensemble de motorisation. De cette manière on évite la dépose de capots avant complets pour la manutention de l'ensemble de motorisation. Les trappes amovibles sont des trappes aptes à être ouvertes et peuvent être par exemple des trappes coulissantes ou pivotantes ou des trappes aptes à être retirées des capots.

Par « amovible » on entend coulissant, pivotant ou apte à être retiré au moins partiellement.

L'ensemble de motorisation comporte une chape de manutention fixée sur chaque point de levage supérieur lorsque les trappes amovibles sont ouvertes et l'inverseur de poussée est ouvert.

Avantageusement, chaque point de levage supérieur est disposé dans un plan transversal à l'intérieur d'un secteur angulaire centré sur l'axe de la nacelle, compris entre 20 et 40° au-dessus du diamètre horizontal de cette nacelle. Avec cet angle on répartit les efforts de levage de chaque côté de la nacelle, en permettant la pose de chapes de manutention sur ces points de levage dirigées radialement vers l'extérieur, qui ne dépassent pas de l'encombrement transversal de la nacelle.

Avantageusement, la nacelle comporte un capot avant inférieur et le moteur tel que le turboréacteur comporte deux points de support inférieurs disposés chacun radialement derrière le capot avant inférieur.

L'invention a aussi pour objet un chariot selon la revendication 6, remarquable en ce qu'il est configuré pour présenter dans la direction transversale une largeur totale inférieure à la largeur maximum de l'ensemble de motorisation. De cette manière le chariot n'augmente pas la largeur de la nacelle pendant son transport.

Le chariot présente donc dans la direction transversale une largeur totale inférieure à la largeur maximum de l'ensemble de motorisation.

Selon un mode de réalisation, le chariot comporte de chaque côté un bras articulé comportant une partie inférieure reliée par un pivot à la base du chariot, et une partie supérieure comportant un point d'appui venant se fixer sur un point de levage supérieur.

Selon un autre mode de réalisation, le chariot comporte de chaque côté un montant disposé en arrière des capots avant latéraux, relié en partie supérieure à un point de levage supérieur.

Dans ce cas, avantageusement chaque montant comporte en arrière dans la direction longitudinale, une jambe de force prenant appui sur la base du chariot en arrière de ce montant.

De plus, avantageusement chaque montant comporte en avant dans la direction longitudinale, en partie supérieure des bras allongés vers l'avant reliés à leurs extrémités avant à un point de levage supérieur.

Avantageusement, les bras articulés ou les montants sont démontables.

En complément, le chariot peut comporter une traverse inférieure transversale de transport amont, se fixant sous des points de support inférieurs du moteur, en particulier du turboréacteur.

Avantageusement, le chariot comprend des points d'appui pour les points de levage supérieurs et/ou les points de support inférieurs. Il comporte entre ces points d'appui une liaison permettant de rattraper des jeux dus à des différences de géométrie entre celle du moteur tel que le turboréacteur et celle de ce chariot.

L'invention a aussi pour objet un ensemble de transport de moteur comprenant un ensemble de motorisation et un chariot portant l'ensemble de motorisation comprenant l'une quelconque des caractéristiques précédentes.

Selon une caractéristique, le chariot comporte de chaque côté un bras articulé ou un montant étant relié à l'un des points de levage supérieurs par l'intermédiaire d'une chape de manutention fixée sur ce point de levage supérieur.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma en coupe transversale d'un ensemble de motorisation selon l'invention, selon un plan de coupe passant par des points de levage et de support disposés derrière des capots avant ;
- les figures 2, 3, 4, et 5 présentent dans le même plan de coupe, différentes étapes d'utilisation d'un premier type de chariot adapté pour cet ensemble de motorisation ;
- les figures 6, 7, 8 et 9 présentent successivement en coupe transversale, de côté, de face avec une petite inclinaison et de face, un deuxième type de chariot adapté pour cet ensemble de motorisation ; et
- la figure 10 présente en coupe transversale une variante de ce deuxième type de chariot ne comportant pas de poutre inférieure de transport.

Pour plus de clarté, les éléments identiques ou similaires sont repérés par des signes de référence identiques sur l'ensemble des figures.

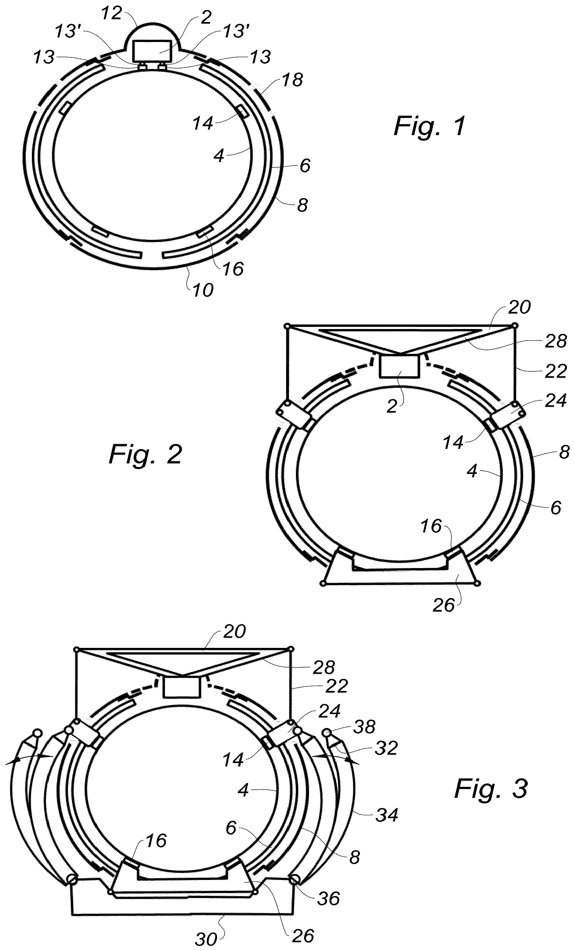

La figure 1 présente une nacelle contenant un turboréacteur à double flux 4 supporté par un pylône 2 disposé à 12h.

A cet effet, le turboréacteur comprend des points de suspensions 13 configurés pour recevoir des chapes de suspension 13' permettant de fixer le turboréacteur au pylône 2.

Chaque côté du turboréacteur 4 est entouré par un ensemble de grilles d'inversion de poussée 6, qui dans une position fermée de l'inverseur de poussée se trouve radialement derrière des capots avant 8, 10 formant la surface extérieure aérodynamique de la nacelle.

Les capots avant comportent de manière symétrique par rapport à un axe vertical, des capots latéraux 8 couvrant une grande partie des côtés, un capot inférieur 10, et un capot supérieur 12 comprenant un capotage aérodynamique dans le prolongement d'un pylône de suspension 2 fixé sous un aéronef. Le contour extérieur du turboréacteur 4 comporte des points de levage 14 et des points de support 16 solidement fixés à ce turboréacteur pour supporter sa masse, et disposés respectivement en partie supérieure nettement au-dessus d'un diamètre horizontal, dans des positions à environ 60 et 300°, appelées aussi positions 2h et 10h, et en partie inférieure dans des positions à environ 145 et 215°, proches des positions 5h et 7h. Ces points de levage sont distincts des points de fixation décrits plus haut. Les points de levage se distinguent par le fait qu'ils sont dimensionnés pourtransmettent des charges inférieures à celle des points de suspension. Comme cela apparaîtra plus loin dans la description ces points de levage ont un rôle lors de phase de maintenance statique du moteur et à ce titre les efforts qui vont transiter par ces points sont très inférieurs à ceux qui transitent par les points de suspension en phase d'utilisation de l'ensemble de motorisation.

Par définition, et de façon classique en soi, les points de levage 14 sont aptes à recevoir des chapes de manutention 24 (figure 2) permettant de soulever et de transporter la motorisation complète avec sa nacelle. Les chapes de manutention 24 sont préférablement des éléments rapportés destinés à être retirés une fois que l'ensemble de motorisation est fixé au pylône de suspension 2 au niveau des points de suspension 13.

Chaque capot latéral 4 comporte en partie supérieure une trappe amovible 18 et mobile entre une position fermée dans laquelle la trappe affleure ledit capot et une position ouverte dans laquelle la trappe ouvre l'accès à un point de levage supérieur 14, disposée radialement devant un point de levage supérieur 14. La trappe amovible est apte à être complètement retirée du capot latéral 4. Les points de support inférieurs 16 sont disposés derrière le capot inférieur 10.

De cette manière en ouvrant de manière rapide les trappes amovibles 18, représentant des petits éléments faciles à stocker, on accède aux points de levage supérieurs 14. En particulier les points de levage 14 et les points de support 16 représentent des fixations résistantes qui peuvent recevoir des éléments techniques appliquant des efforts, comme des vérins de déplacement des grilles d'inversion 6, les trappes amovibles 18 disposées en regard facilitent alors des travaux de maintenance sur ces éléments techniques.

La figure 2 présente après l'ouverture des trappes 18 sans déposer les capots latéraux 8, et l'ouverture de l'inverseur de poussée pour reculer ses grilles 6 afin de dégager les points de levage 14 se trouvant derrière, la fixation d'une chape de manutention 24 sur chaque point de levage 14. De même le capot inférieur 10 est déposé pour fixer une poutre de transport inférieure transversale 26 sur les deux points de support inférieurs 16.

Un palan de levage 20 fixé au pylône 2 de l'aéronef, comporte de chaque côté un bras 28 s'étendant dans la largeur, présentant une extrémité venant au-dessus de la chape de manutention 24, pour recevoir un câble de suspension 22 fixé à cette chape.

La figure 3 présente un chariot de transport 30 comportant de chaque côté un bras articulé 34 qui pivote dans un plan transversal grâce à un pivot 36 disposé à sa base, présentant un axe longitudinal fixé sur le côté du chariot.

Le bras articulé 34 comporte une partie inférieure reliée par le pivot 36 à la base du chariot 30, et une partie supérieure comportant un point d'appui 38 venant se fixer sur un point de levage supérieur 14.

En écartant les deux bras articulés 34, on dégage entre ces bras un espace disponible pour avancer le chariot 30 et le disposer sous la nacelle. Ensuite on rapproche les deux bras 34 vers l'axe de la nacelle, pour ajuster de chaque côté un point d'ancrage supérieur 30 de ce bras sur la chape de manutention 24, puis pour se fixer dessus grâce à un système de verrouillage rapide.

On peut ensuite détacher le palan de levage 20 des chapes de manutention 24, pour emporter le chariot 30 posé sur des roues de déplacement, avec le système de motorisation complet qui a subi un minimum de démontage de ses capots avant.

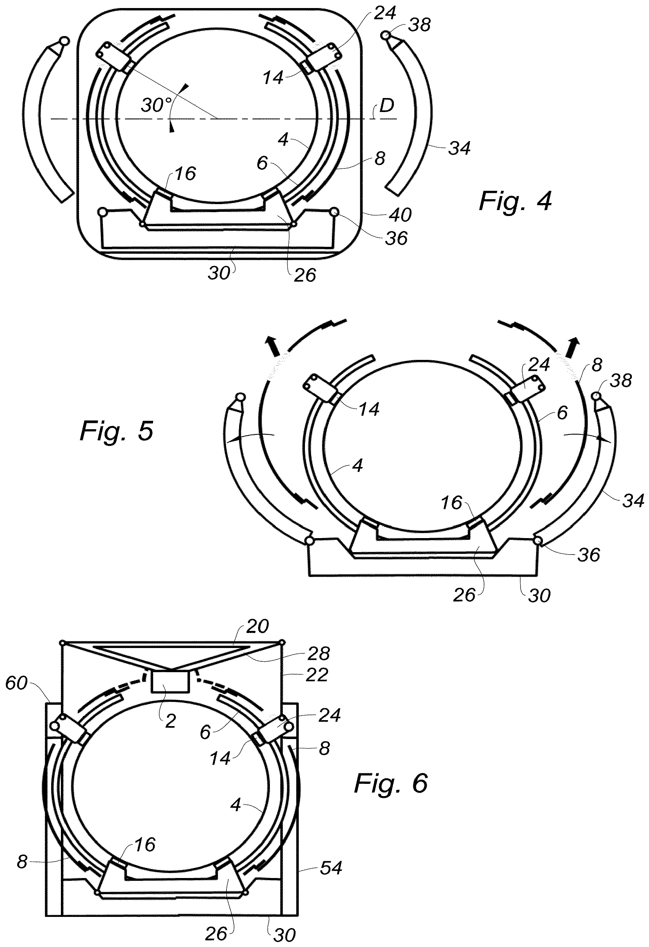

La figure 4 présente le chariot de manutention 30 apporté ensuite, supportant l'ensemble de motorisation, après la dépose de ses bras articulés 34 en détachant les pivots 36 maintenant ces bras sur le chariot, qui comporte un encombrement transversal minimum lui permettant en particulier d'entrer dans une section de passage minimum 40. Cette section de passage 40 peut représenter en particulier la section de passage d'une porte cargo d'un avion, d'un container ou d'une remorque de camion.

Pendant le déplacement du chariot de manutention 30 on emporte avec lui les bras articulés 34, pour les fixer à nouveau sur ce chariot lors d'opérations ultérieures.

On notera que les chapes de manutention 24 disposées nettement au-dessus du diamètre horizontal D de la nacelle, avantageusement dans un secteur angulaire centré sur l'axe de la nacelle, compris entre 20 et 40° au-dessus de ce diamètre, en particulier suivant un angle de 30°, peuvent dépasser à l'extérieur du contour de cette nacelle sans pour autant sortir de sa largeur totale.

La figure 5 présente si nécessaire la dépose des panneaux latéraux 8 de la nacelle afin d'effectuer des opérations de maintenance derrière ces panneaux, qui peut se faire avec les bras articulés 34 restant en place sur le chariot 30, en les écartant seulement ce qui réduit les opérations de démontage.

L'ouverture des bras 34 est suffisante pour permettre un écartement des panneaux latéraux 8 les dégageant des chapes de manutention 24, puis un déplacement de ces panneaux vers le haut ou dans la direction longitudinale pour les sortir.

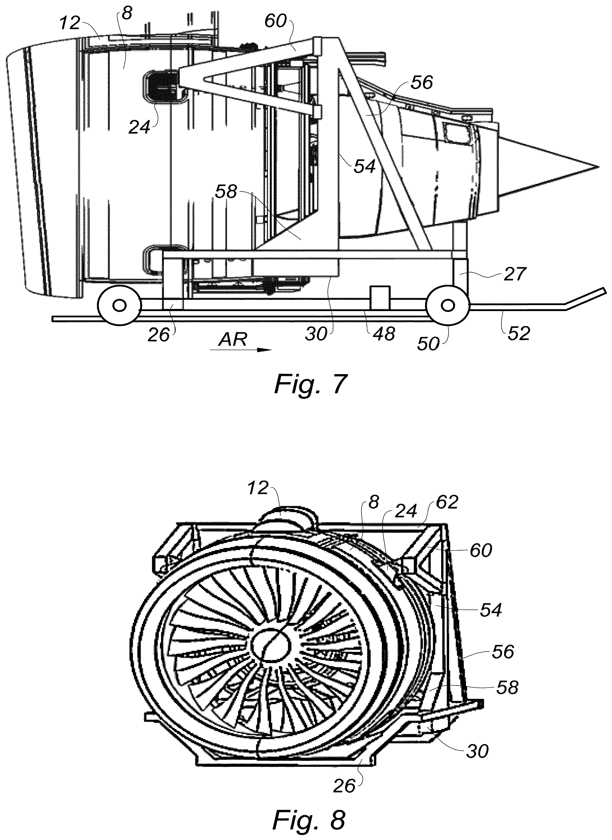

La figure 7 présente un chariot de manutention 30 recevant un ensemble de motorisation, qui est posé sur une plate-forme de déplacement 48 équipée de roues 50, et du côté arrière indiqué par la flèche AR d'un timon de traction 52.

Les figures 6, 7, 8 et 9 présentent le chariot de manutention 30 comprenant de chaque côté un montant vertical 54 se trouvant en arrière des capots avant 8, au niveau des capots arrière mobiles de l'inverseur de poussée qui sont démontés. A ce niveau la largeur de la nacelle est réduite, ce qui permet de disposer les montants verticaux 54 légèrement en retrait de l'encombrement latéral extérieur total de la nacelle donné par les capots avant 8 restant assemblés.

Chaque montant vertical 54 est rigidement fixé à la base du chariot 30, en partie inférieure par un gousset triangulaire 58 tourné vers l'avant, venant nettement en dessous du diamètre horizontal de la nacelle afin de rester dans l'encombrement latéral de ces montants, et en partie supérieure par une jambe de force 56 inclinée vers l'arrière.

Les deux extrémités supérieures des montants 54 sont reliées par une traverse supérieure 62 venant au-dessus de la nacelle, qui donne de la stabilité latérale à ces montants.

En partie supérieure le côté avant de chaque montant vertical 54 comporte deux bras tournés vers l'avant 60, formant un triangle allongé longitudinalement présentant sa petite base fixée à ce montant. L'extrémité avant des bras 60 reçoit une fixation rapide d'une chape de manutention supérieure 24 installée sur le turboréacteur. Une traverse inférieure transversale 26 amont est fixée sur les points de support inférieurs 16. Le chariot comprend également une traverse inférieure transversale 27 aval.

Le raidissement important dans la direction longitudinale des montants verticaux 54, grâce aux goussets avant 58 et aux jambes de force arrière 56, permet à ces montants de résister à la charge importante de l'ensemble de motorisation appliquée en porte-à-faux à l'extrémité avant des bras 60.

Avantageusement on dispose sur le chariot 30, dans la chaîne d'éléments reliant les points de levage supérieurs 14 aux points de support inférieurs 16, une liaison 32 permettant de rattraper des jeux dus à des petites différences de géométrie entre celle du turboréacteur et celle de ce chariot. On peut en particulier prévoir des éléments légèrement élastiques, des jeux ou des plages de réglage.

En option les montants verticaux 54 peuvent aussi être liés à la base du chariot 30 par des pivots longitudinaux, comme les bras articulés 34 présentés sur le premier type de chariot, ou être démontables.

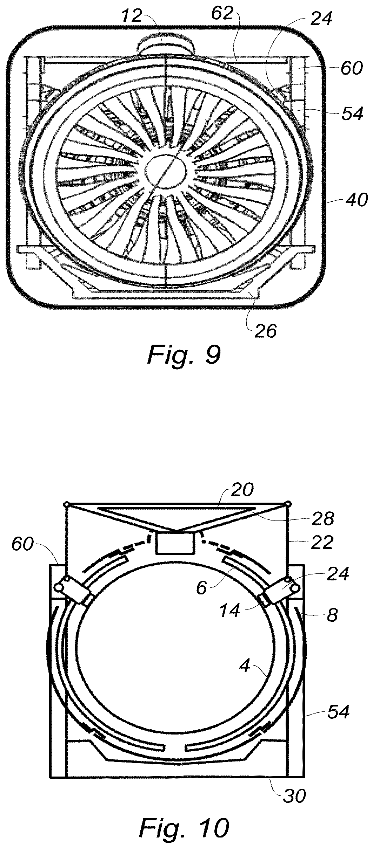

La figure 9 présente la section de passage minimum 40 nécessaire pour l'ensemble de motorisation, qui est équivalente à celle donnée par le premier type de chariot.

La figure 10 présente en variante un chariot 30 n'utilisant pas la poutre inférieure transversale 26, qui comporte des montants verticaux 54 suffisamment rigides pour porter la masse avant de l'ensemble de motorisation. Avec ce chariot on n'a pas besoin de prévoir de point de support inférieur 16 sur le turboréacteur.

## Revendications

1. Ensemble de motorisation comportant un moteur tel un turboréacteur à double flux (4), et une nacelle comprenant à l'extérieur autour d'une veine annulaire d'air frais, en partant de l'amont, une entrée d'air, des capots avant latéraux (8), un inverseur de poussée comprenant des grilles d'inversion (6) et des capots arrières mobiles, les capots avant latéraux (8) entourant les grilles d'inversion (6) de l'inverseur de poussée quand il est fermé, et les capots arrière mobiles reculant avec ces grilles (6) pour ouvrir l'inverseur, le moteur comportant des points de levage (14) formant des points résistants d'accrochage destinés à recevoir des chapes de manutention permettant de soulever et de transporter l'ensemble de motorisation, l'ensemble de motorisation étant tel que les points de levage (14) sont deux points de levage supérieurs (14) disposés sur le moteur, chacun d'un côté du moteur radialement derrière les capots avant latéraux (8) au-dessus du diamètre horizontal (D) de l'ensemble de motorisation, et tel que chaque capot avant latéral (8) comporte une trappe amovible (18) et mobile entre une position fermée dans laquelle la trappe affleure ledit capot et une position ouverte dans laquelle la trappe ouvre l'accès à un point de levage supérieur (14), disposée radialement à l'extérieur du point de levage supérieur (14) de son côté.

2. Ensemble de motorisation selon la revendication 1, **caractérisé en ce qu'**il comporte des points de suspension (13) à un pylône.

3. Ensemble de motorisation selon l'une quelconque des revendications précédentes, **caractérisé en ce qu'**il comporte une chape de manutention (24) fixée sur chaque point de levage supérieur (14) lorsque les trappes amovibles (18) sont ouvertes et l'inverseur de poussée (6) est ouvert.

4. Ensemble de motorisation selon l'une des revendications précédentes, **caractérisé en ce que** chaque point de levage supérieur (14) est disposé dans un plan transversal à l'intérieur d'un secteur angulaire centré sur l'axe de la nacelle, compris entre 20 et 40° au-dessus du diamètre horizontal (D) de cette nacelle.

5. Ensemble de motorisation selon l'une quelconque des revendications précédentes, **caractérisé en ce que** la nacelle comporte un capot avant inférieur (10) et le moteur tel que le turboréacteur comporte deux points de support inférieurs (16) disposés chacun radialement derrière le capot avant inférieur (10).

6. Chariot configuré pour transporter un ensemble de motorisation selon l'une quelconque des revendications précédentes, le chariot étant configuré pour présenter dans la direction transversale une largeur totale inférieure à la largeur maximum de l'ensemble de motorisation.

7. Chariot selon la revendication précédente, **caractérisé en ce qu'**il comporte de chaque côté un bras articulé (34) comportant une partie inférieure reliée par un pivot (36) à la base du chariot (30), et une partie supérieure comportant un point d'appui (38) venant se fixer sur un point de levage supérieur (14).

8. Chariot selon la revendication 6, **caractérisé en ce qu'**il comporte de chaque côté un montant (54) disposé en arrière des capots avant latéraux (8), relié en partie supérieure à un point de levage supérieur (14).

9. Chariot selon la revendication précédente, **caractérisé en ce que** chaque montant (54) comporte en arrière dans la direction longitudinale, une jambe de force (56) prenant appui sur la base du chariot (30) en arrière de ce montant (54).

10. Chariot selon la revendication 8 ou 9, **caractérisé en ce que** chaque montant (54) comporte en avant dans la direction longitudinale, en partie supérieure des bras allongés vers l'avant (60) reliés à leurs extrémités avant à un point de levage supérieur (14).

11. Chariot selon l'une quelconque des revendications 7 à 10, **caractérisé en ce que** les bras articulés (34) ou les montants (54) sont démontables.

12. Chariot selon l'une quelconque des revendications 6 à 11 configuré pour transporter un ensemble de motorisation selon la revendication 5, **caractérisé en ce qu'**il comporte une traverse inférieure transversale de transport amont (26), se fixant sous les points de support inférieurs (16) du moteur.

13. Chariot selon l'une quelconque des revendications 6 à 12 configuré pour transporter un ensemble de motorisation selon la revendication 5, comprenant des points d'appui pour les points de levage supérieurs (14) et des points d'appui pour les points de support inférieurs (16), **caractérisé en ce qu'**il comporte entre ces points d'appui une liaison (32) permettant de rattraper des jeux dus à des différences de géométrie entre celle du moteur et celle de ce chariot (30).

14. Ensemble de transport de moteur, comprenant un ensemble de motorisation selon l'une quelconque des revendications 1 à 5 et un chariot selon l'une quelconque des revendications 6 à 13 portant l'ensemble de motorisation.

## Patentansprüche

1. Motorisierungsanordnung, umfassend einen Motor wie ein Zweistromstrahltriebwerk (4) und eine Gondel, die außen um einen ringförmigen Frischluftstrom, ausgehend von der stromaufwärtigen Seite, einen Lufteinlass, vordere Seitenabdeckungen (8), eine Schubumkehrvorrichtung mit Schubumkehrgittern (6) und hintere bewegliche Abdeckungen umfasst, wobei die vorderen Seitenabdeckungen (8) die Schubumkehrgitter (6) der Schubumkehrvorrichtung umgeben, wenn sie geschlossen ist, und die hinteren beweglichen Abdeckungen mit den Gittern (6) zurückfahren, um die Umkehrvorrichtung zu öffnen, wobei der Motor Hebepunkte (14) umfasst, die widerstandsfähige Befestigungspunkte ausbilden, die dazu bestimmt sind, die Beförderungsabdeckungen aufzunehmen, die das Anheben und Transportieren der Motorisierungsanordnung ermöglichen, wobei die Motorisierungsanordnung derart sind, dass die Hebepunkte (14) zwei obere Hebepunkte (14) sind, die an dem Motor jeweils auf einer Seite des Motors radial hinter den vorderen Seitenabdeckungen (8) über dem horizontalen Durchmesser (D) der Motorisierungsanordnung angeordnet sind, und dass jede vordere Seitenabdeckung (8) eine entfernbare Klappe (18) umfasst und zwischen einer geschlossenen Position, in der die Klappe bündig mit der Abdeckung ist, und einer offenen Position bewegbar ist, in der die Klappe den Zugang zu einem oberen Hebepunkt (14) öffnet, die radial außerhalb des oberen Hebepunktes (14) an ihrer Seite angeordnet ist.

2. Motorisierungsanordnung nach Anspruch 1, **dadurch gekennzeichnet, dass** sie Aufhängepunkte (13) eines Masts aufweist.

3. Motorisierungsanordnung nach einem der vorhergehenden Ansprüche, **dadurch gekennzeichnet, dass** sie einen Beförderungsbügel (24) umfasst, der an jedem oberen Hebepunkt (14) befestigt ist, wenn die entfernbaren Klappen (18) geöffnet sind und die Schubumkehrvorrichtung (6) geöffnet ist.

4. Motorisierungsanordnung nach einem der vorhergehenden Ansprüche, **dadurch gekennzeichnet, dass** jeder obere Hebepunkt (14) in einer Querebene innerhalb eines Winkelsektors angeordnet ist, der auf der Achse der Gondel zentriert ist, die zwischen 20 und 40° über dem horizontalen Durchmesser (D) der Gondel beträgt.

5. Motorisierungsanordnung nach einem der vorangehenden Ansprüche, **dadurch gekennzeichnet, dass** die Gondel eine untere vordere Abdeckung (10) umfasst und der Motor wie das Strahltriebwerk zwei untere Trägerpunkte (16) umfasst, die jeweils radial hinter der unteren vorderen Abdeckung (10) angeordnet sind.

6. Fahrzeug, das konfiguriert ist, um eine Motorisierungsanordnung nach einem der vorhergehenden Ansprüche zu transportieren, wobei das Fahrzeug konfiguriert ist, um in der Querrichtung eine Gesamtbreite kleiner als die maximale Breite der Motorisierungsanordnung aufzuweisen.

7. Fahrzeug nach dem vorhergehenden Anspruch, **dadurch gekennzeichnet, dass** es an jeder Seite einen Gelenkarm (34) umfasst, der einen unteren Teil, der durch einen Drehzapfen (36) mit der Basis des Fahrzeugs (30) verbunden ist, und einen oberen Teil umfasst, der einen Drehpunkt (38) umfasst, der an einem oberen Hebepunkt (14) befestigt ist.

8. Fahrzeug nach Anspruch 6, **dadurch gekennzeichnet, dass** es an jeder Seite eine hinter der vorderen Seitenabdeckung (8) angeordnete Strebe (54) aufweist, die im oberen Teil mit einem oberen Hebepunkt (14) verbunden ist.

9. Fahrzeug nach dem vorhergehenden Anspruch, **dadurch gekennzeichnet, dass** jede Strebe (54) in Längsrichtung nach hinten einen Stützfuß (56) umfasst, der auf der Basis des Fahrzeugs (30) hinter dieser Strebe (54) anliegt.

10. Fahrzeug nach Anspruch 8 oder 9, **dadurch gekennzeichnet, dass** jede Strebe (54) in Längsrichtung nach vorne im oberen Teil sich nach vorne erstreckende Arme (60) umfasst, die an ihren vorderen Enden mit einem oberen Hebepunkt (14) verbunden sind.

11. Fahrzeug nach einem der Ansprüche 7 bis 10, **dadurch gekennzeichnet, dass** die Gelenkarme (34) oder die Streben (54) abnehmbar sind.

12. Fahrzeug nach einem der Ansprüche 6 bis 11, das konfiguriert ist, um eine Motorisierungsanordnung nach Anspruch 5 zu transportieren, **dadurch gekennzeichnet, dass** es einen quer verlaufenden unteren Querträger des stromaufwärtigen Transports (26) umfasst, der unter den unteren Trägerpunkten (16) des Motors befestigt ist.

13. Fahrzeug nach einem der Ansprüche 6 bis 12, das konfiguriert ist, um eine Motorisierungsanordnung nach Anspruch 5 zu transportieren, umfassend die Stützpunkte für die oberen Hebepunkte (14) und die Stützpunkte für die unteren Trägerpunkte (16), **dadurch gekennzeichnet, dass** es zwischen diesen Stützpunkten ein Verbindungsglied (32) umfasst, das das Ausgleichen von Spiel aufgrund von Geometrieunterschieden zwischen der des Motors und der des Fahrzeugs (30) ermöglicht.

14. Motortransportanordnung, umfassend eine Motorisierungsanordnung nach einem der Ansprüche 1 bis 5 und ein Fahrzeug nach einem der Ansprüche 6 bis 13, das die Motorisierungsanordnung trägt.

## Claims

1. A drive unit including a motor such as a bypass turbojet engine (4), and a nacelle comprising on the outside around an annular flow path of fresh air, from the upstream, an air inlet, lateral front cowls (8), a thrust reverser comprising thrust reverser cascades (6) and movable rear cowls, the lateral front cowls (8) surrounding the thrust reverser cascades (6) of the thrust reverser when it is closed, and the movable rear cowls moving back with these cascades (6) to open the thrust reverser, the motor including lifting points (14) forming resistant hooking points intended to receive handling clevises allowing lifting and transporting the drive unit, the drive unit being such that the lifting points (14) are two upper lifting points (14) disposed on the motor, each on one side of the motor radially behind the lateral front cowls (8) above the horizontal diameter (D) of the drive unit, and such that each lateral front cowl (8) includes a removable hatch (18) which is movable between a closed position in which the hatch is flush with said cowl and an open position in which the hatch opens the access to an upper lifting point (14), disposed radially outward of the upper lifting point (14) on its side.

2. The drive unit according to claim 1, **characterized in that** it includes suspension points (13) to a mast.

3. The drive unit according to any of the preceding claims, **characterized in that** it includes a handling clevis (24) fastened on each upper lifting point (14) when the removable hatches (18) are open and the thrust reverser (6) is open.

4. The drive unit according to any of the preceding claims, **characterized in that** each upper lifting point (14) is disposed in a transverse plane inside an angular sector centered on the axis of the nacelle, comprised between 20 and 40° above the horizontal diameter (D) of this nacelle.

5. The drive unit according to any one of the preceding claims, **characterized in that** the nacelle includes a lower front cowl (10) and the motor such that the turbojet engine includes two lower support points (16) each disposed radially behind the lower front cowl (10).

6. A carriage configured for transporting a drive unit according to any one of the preceding claims, the carriage being configured to present, in the transverse direction, a total width less than the maximum width of the drive unit.

7. The carriage according to the preceding claim, **characterized in that** it includes, on each side, a hinged arm (34) including a lower portion connected by a pivot (36) to the base of the carriage (30), and an upper portion including a bearing point (38) which is fastened on an upper lifting point (14).

8. The carriage according to claim 6, **characterized in that** it includes, on each side, an upright (54) disposed rearwardly of the lateral front cowls (8), connected, in the upper portion, to an upper lifting point (14).

9. The carriage according to the preceding claim, **characterized in that** each upright (54) includes rearward in the longitudinal direction, a strut (56) bearing on the base of the carriage (30) behind this upright (54).

10. The carriage according to claim 8 or 9, **characterized in that** each upright (54) includes forward in the longitudinal direction, in the upper portion, arms (60) extended forward, connected, at the front ends thereof, to an upper lifting point (14).

11. The carriage according to any one of claims 7 to 10, **characterized in that** the hinged arms (34) or the uprights (54) can be disassembled.

12. The carriage according to any one of claims 6 to 11 configured for transporting a drive unit according to claim 5, **characterized in that** it includes an upstream transport transverse lower cross-member (26), which is fastened under the lower support points (16) of the motor.

13. The carriage according to any one of claims 6 to 12 configured for transporting a drive unit according to claim 5, comprising bearing points for the upper lifting points (14) and bearing points for the lower support points (16), **characterized in that** it includes, between these bearing points, a connection (32) allowing taking up clearances due to differences in geometry between that of the motor and that of this carriage (30).

14. A motor transport assembly, comprising a drive unit according to any one of claims 1 to 5 and a carriage according to any one of claims 6 to 13 carrying the drive unit.
